# EUROPEAN PATENT APPLICATION

(11) **EP 3 002 770 A1**
(43) Date of publication of application: **06.04.2016**
(21) Application number: 14187487.5
(22) Date of filing: 02.10.2014
(51) Int. Cl.: H01H 9/22, H01H 13/18, F24D 19/10, G01K 17/08

(54) **Tamper detection**

(71) Applicant: ITRON, INC., Liberty Lake, WA 99019 (US)
(72) Inventor: Guillot-Jerome, Denis, Liberty Lake, WA Washington 99019 (US); Rigomier, Vincent, Liberty Lake, WA Washington 99019 (US); Arnaud-Godet, Brice, Liberty Lake, WA Washington 99019 (US)
(74) Representative: Morrall, Jonathan Ian McLachlan

(57) **Abstract**

A tamper detection assembly comprising a first resiliently biased member supported on a first portion of a shaft of a first support member, where the first resiliently biased member passes through the shaft, and a second resiliently biased member supported on a second portion of the shaft of the first support member wherein the first resiliently biased member is arranged to electrically bridge contacts on a second support member to indicate a tamper event when the biasing force of the second resiliently biased member is greater than any compression force thereon.

## Description

This disclosure relates to tamper detection. It is suitable for tamper detection in relation to housings, and is particularly suitable for, but by no means limited to tamper detection in relation to a housing of a heat cost allocator.

### Background

Devices often comprise a housing, both for protection and security purposes. A housing may provide protection for the systems therewithin and/or security against unauthorised access to the internals of the device, or unauthorised repositioning of the device.

The lifetime of the device comprising the housing may be many years, and as such, may be positioned in the same static operational position for many years without a tamper incident occurring. The tamper detect mechanism may be required to withstand many years of non-movement, but should be able to react without delay, and detect, a tamper event.

Known systems for detecting a security breach of a housing include a push button switch positioned such that when a tamper event occurs such as the housing being breached or repositioned, the push button switch is arranged to change state which is detectable. Such a push button switch, if a standard 'off the shelf' sealed switch which is often small in size (if a surface mount device) and hence complicated in mechanical operation, may get stuck in the static state associated with years of normal operation which would then require complex disassembly of the device, such as a heat cost allocator, in order to effect a repair. Other known systems for tamper detection may include more complex assemblies which often comprise many separate parts to provide the detection mechanism which may have to be assembled in several stages including assembling the means of tamper detection on both sides of a PCB which further complicates the manufacturing process of the device.

Such a housing is often used for a heat cost allocator. A heat cost allocator is a device that is typically positioned on a radiator and measures the temperature of the radiator and the temperature of the ambient air in an area of interest. A cost is then apportioned to the heating effort that is being imparted to the air within the area of interest. In order for a heat cost allocator to carry out its task, it must remain in the correct position without being tampered with. It is therefore desirable to provide detection of a tamper with the housing of a heat cost allocator. Further, during normal operation, a heat cost allocator is subjected to heat cycles which the tamper detect mechanism (and any associated moving parts) may also be subjected to.

It is therefore desirable to provide a means of detecting a tamper that is simple in both construction and assembly.

### Summary

According to a first aspect there is provided a tamper detection assembly as defined in Claim 1 of the appended claims. Thus there is provided a tamper detection assembly comprising a first resiliently biased member supported on a first portion of a shaft of a first support member, where the first resiliently biased member passes through the shaft, and a second resiliently biased member supported on a second portion of the shaft of the first support member wherein the first resiliently biased member is arranged to electrically bridge contacts on a second support member to indicate a tamper event when the biasing force of the second resiliently biased member is greater than any compression force thereon.

Optionally, the first resiliently biased member is electrically conductive.

Optionally, the second support member comprises a PCB or other structure for providing bridgeable contacts.

Optionally, the shaft of the first support member defines an axis and further optionally, wherein the second resiliently biased member is positioned on the axis.

Optionally, the second portion of the shaft comprises a third portion perpendicular to the axis.

This allows for the second resiliently biased member to exert a force on the third portion of the first support member so that the first resiliently biased member electrically bridges contacts to enable a reliable tamper detection.

Optionally, the first resiliently biased member is arranged to resist the bias of the second resiliently biased member.

Optionally the first support member is non-electrically conductive.

Optionally, the second resiliently biased member is supported by a further non-conductive member that abuts the second support member.

Optionally, the further non-conductive member is positioned on an opposite side of the second support member to the contacts.

This provides a good coupling with the contacts and ensures that only the first resiliently biased member provides the coupling.

Optionally, the second support member is positioned within a housing wherein in a normal operational state (or housing closed position), a first portion of the housing is arranged to provide a compressive force against the bias of the second resiliently biased member such that the first resilient member does not bridge the contacts.

Optionally, the first portion of the housing is movable in relation to another portion of the housing which supports the second support member.

Optionally, the shaft of the first support member comprises a material of low thermal conductivity.

Optionally, the tamper detect assembly further comprises a detect circuit coupled to the contacts.

Optionally, the tamper detect assembly is arranged to be assembled before being mounted on the second support member.

Optionally, the second support member comprises only one aperture associated with the mounting of the tamper detect assembly.

Optionally, the housing is a housing of a heat cost allocator.

Optionally, the first resiliently biased member comprises a leaf spring, disc spring, coil spring, circular spring, or a volute spring.

Optionally, the second resiliently biased member comprises a leaf spring, disc spring, coil spring, circular spring, or a volute spring.

According to an aspect there is provided a method of assembling a tamper detection assembly as defined in claim 2. The method comprises positioning a first resiliently biased member on a first portion of a shaft of a first support member, where the first resiliently biased member passed through the shaft, positioning a second resiliently biased member on a second portion of the shaft of the first support member, and then inserting the shaft of the first support member through an aperture of a second support member such that the first resiliently biased member is positioned on one side of the second support member, and the second resiliently biased member is positioned on the opposite side of the second support member, and wherein the first resiliently biased member is arranged to electrically bridge contacts on the second support member to indicate a tamper event when the biasing force of the second resiliently biased member is greater than any compression force thereon.

Optionally, the first resiliently biased member is arranged to deform during insertion through the aperture of the second support member.

This allows ease of installation, and assembly of the tamper detect assembly away from the second support member, and hence a reduced number of installation steps are required to achieve installation of the tamper detect mechanism. The tamper detect assembly as a whole has reduced complexity.

Optionally, the first resiliently biased member is electrically conductive.

Optionally, the second support member comprises a PCB or other structure for providing bridgeable contacts.

Optionally, the shaft of the first support member defines an axis and further optionally, wherein the second resiliently biased member is positioned on the axis.

Optionally, the second portion of the shaft comprises a third portion perpendicular to the axis.

This allows for the second resiliently biased member to a exert force on the third portion of the first support member so that the first resiliently biased member electrically bridges contacts to enable a reliable tamper detection.

Optionally, the first resiliently biased member is arranged to resist the bias of the second resiliently biased member.

Optionally the first support member is non-electrically conductive.

Optionally, the second resiliently biased member is supported by a further non-conductive member that abuts the second support member.

Optionally, the further non-conductive member is positioned on an opposite side of the second support member to the contacts.

Optionally, the further non-conductive member is positioned on an opposite side of the second support member than that of the first resiliently biased member.

This provides a good coupling with the contacts and ensures that only the first resiliently biased member provides the coupling.

Optionally, the method further comprises positioning the second support member within a housing wherein in a normal operational state (or housing closed position) a first portion of the housing can provide a compression against the bias of the second resiliently biased ember such that the first resilient member does not bridge the contacts.

Optionally, the first portion of the housing is movable in relation to another portion of the housing which supports the second support member.

Optionally, the shaft of the first support member comprises a material of low thermal conductivity.

Optionally, the tamper detect assembly further comprises a detect circuit coupled to the contacts.

Optionally, the second support member comprises only one aperture associated with the mounting of the tamper detect assembly.

Optionally, the housing is a housing of a heat cost allocator.

Optionally, the first resiliently biased member comprises a leaf spring, disc spring, coil spring, circular spring, or a volute spring.

Optionally, the second resiliently biased member comprises a leaf spring, disc spring, coil spring, circular spring, or a volute spring.

Also disclosed herein:
A heat cost allocator comprising a housing and a tamper detection assembly, the assembly comprising a first resiliently biased member supported on a first portion of a shaft of a first support member, where the first resiliently biased member passes through the shaft, and a second resiliently biased member supported on a second portion of the shaft of the first support member wherein the first resiliently biased member is arranged to electrically bridge contacts on a second support member to indicate a tamper event when the biasing force of the second resiliently biased member is greater than any compression force thereon, and wherein the second support member is arranged to be coupled to the housing.

Optionally, the first resiliently biased member is electrically conductive.

Optionally, the second support member comprises a PCB or other structure for providing bridgeable contacts.

Optionally, the shaft of the first support member defines an axis and further optionally, wherein the second resiliently biased member is positioned on the axis.

Optionally, the second portion of the shaft comprises a third portion perpendicular to the axis.

This allows for the second resiliently biased member to exert a force on the third portion of the support member so that the first resiliently biased member electrically bridges contacts to enable a reliable tamper detection.

Optionally, the first resiliently biased member is arranged to resist the bias of the second resiliently biased member.

Optionally the first support member is non-electrically conductive.

Optionally, the second resiliently biased member is supported by a further non-conductive member that abuts the second support member.

Optionally, the further non-conductive member is positioned on an opposite side of the second support member to the contacts.

This provides a good coupling with the contacts and ensures that only the first resiliently biased member provides the coupling.

Optionally, the second support member is positioned such that in a normal operating state (or housing closed position) a first portion of the housing is arranged to provide a compressive force against the bias of the second resiliently biased member such that the first resilient member does not bridge the contacts.

Optionally, the first portion of the housing is movable in relation to another portion of the housing which supports the second support member.

Optionally, the shaft of the first support member comprises a material of low thermal conductivity.

Optionally, the tamper detect assembly further comprises a detect circuit coupled with the contacts.

Optionally, the tamper detect assembly is arranged to be assembled before being mounted on the second support member.

Optionally, the second support member comprises only one aperture associated with the mounting of the tamper detect assembly.

Optionally, the first resiliently biased member comprises a leaf spring, disc spring, coil spring, circular spring, or a volute spring.

Optionally, the second resiliently biased member comprises a leaf spring, disc spring, coil spring, circular spring, or a volute spring.

With all the aspects, preferable and optional features are defined in the dependent claims.

### Brief Description of the Drawings

Embodiments will now be described, by way of example only, and with reference to the drawings in which:
Figure 1 illustrates the tamper detect assembly in partly assembled form according to an embodiment;
Figure 2 illustrates the tamper detect assembly according to an embodiment;
Figures 3A to 3C illustrate the installation process of the tamper detect assembly according to an embodiment;
Figure 3D illustrates an isometric view of the tamper detect assembly in an extended position (contacts are bridged by first resiliently biased member 10) as also shown in Figure 3C;
Figure 3E illustrates an isometric view of the tamper detect assembly in a compressed position (contacts are not bridged by first resiliently biased member 10);
Figure 4 illustrates the tamper detect assembly installed in the housing of a device (in the extended position of Figure 3D) according to an embodiment;
Figure 5 illustrates the tamper detect assembly installed in the housing of a device (in the compressed position of Figure 3E) according to an embodiment; and
Figure 6 illustrates a zoomed in version of Figure 5 as indicated.

In the figures, like elements are indicated by like reference numerals throughout.

### Overview

In overview, a tamper detect assembly 1 is provided that allows a simpler construction than known approaches. The number of individual components that make up the assembly are reduced, and are also arranged in a simpler manner. For example, the assembly may be fully pre-assembled away from the device for which it will be detecting tamper events. Only a single insertion action is required to install the assembly on the device in question as will be explained herein. Further, owing to the arrangement of the assembly, the insertion force is low which therefore prevents stress to the device (for example a PCB or other support means) when installing. This provides the benefit of a longer lifetime of the device.

Once installed, the tamper detect assembly remains in a 'normally open' state where two pads (on a PCB or other support member) remain electrically disconnected from one another i.e. not bridged by way of the interaction (compression or pushing) of the device housing on the tamper detect assembly. Should the housing of the PCB be tampered with in such a manner that the housing moves, which could be due to attempting to enter the housing, or attempting to move the housing from its operating position, which in the case of a heat cost allocator would be typically on a radiator for which heat cost is to be allocated, the portion of the housing that is pushing on the tamper detect mechanism to keep the two pads on the PCB electrically isolated is able to move relative to the rest of the housing. This movement has the effect of negating the compression or pushing force on the tamper detect assembly. As a result, a first resiliently biased member of the tamper detect assembly is moved towards the two pads to electrically join the pads together because the negated compression or pushing force caused by the movement of the housing portion allows a second resiliently biased member to action its biasing force and create the required movement of the first resiliently biased member towards the two pads.

The bridging of the two pads is detectable by a detect circuit preferably comprising a processor or other PLD or FPGA-type device as would be understood, and hence a tamper event can be logged and appropriate action taken which may include notifying the relevant controlling party which may be a utility company.

### Detailed Description

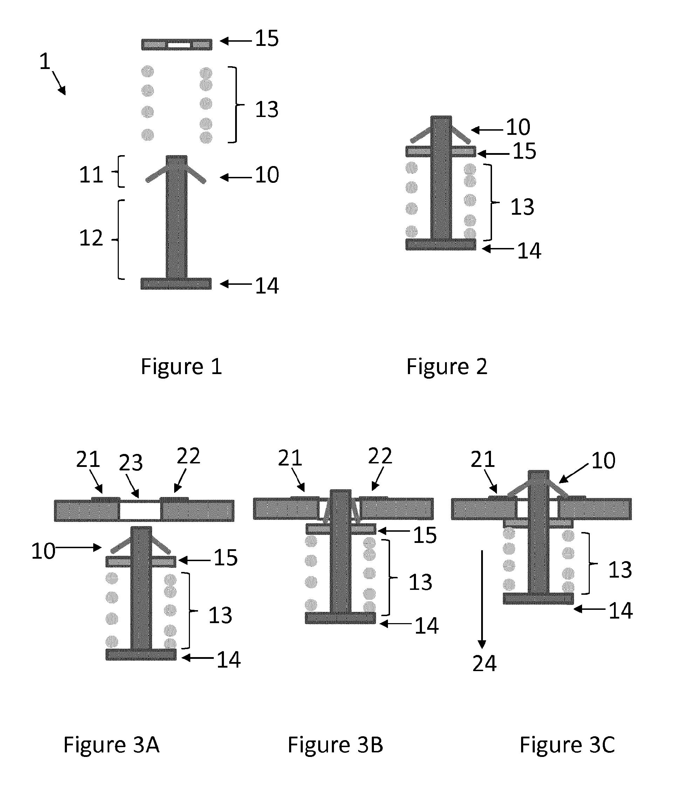

Figure 1 shows the tamper detect assembly 1 in partly assembled form. A first resiliently biased member 10 which may comprise a spring is supported on a first portion 11 of the shaft of support member 12. The shaft may define an axis. Support member 12 may comprise a non-conductive material. Resiliently biased member 10 may comprise a conductive material or may comprise a conductive coating. The first resiliently biased member may comprise two distinct parts that are coupled together. The coupling may be positioned inside the shaft of support member 12. Support member 12 may comprise an aperture through which the first resiliently biased member may be mounted or pass therethrough. A second resiliently biased member 13 is passed over the first resiliently biased member and onto a second portion of the shaft of support member 12. When positioning the second resiliently biased member 13, the first resiliently biased member may deform to allow the second resiliently biased member to pass onto the shaft. When positioned, the second resiliently biased member may abut a perpendicular portion 14 of support member 12. The perpendicular portion may be integral with the support member 12. The second resiliently biased member may be placed onto the shaft of the support member 12 before the first resiliently biased member 10 is positioned on the shaft. The second resiliently biased member may comprise a spring.

The first and second resiliently biased members may each comprise a leaf spring, disc spring, coil spring, circular spring, or a volute spring.

Turning to Figure 2, the tamper detect assembly 1 in assembled form is shown. Optional washer 15 may be positioned on the shaft of support member 12 to abut the opposite end of the second resiliently biased member than perpendicular portion 14. Washer 15 may comprise an insulating material. The assembly illustrated in Figure 2 may be assembled away from any device for which tampering is to be detected. This simplifies the manufacturing process. The assembly is shown in Figure 2 with the first resilient member not in contact with optional washer 15. This is for ease of reference. The action of the second resiliently biased member 13 in being biased to extend would touch either the first resiliently biased member 10 or the optional washer 15 as would be understood.

Figures 3A to 3C illustrate the process of installing the tamper detect assembly in a device for which tampering is to be detected. Electrically conductive contacts 21, 22 are positioned on a support member 20 of the device for which tampering is to be detected. Support member 20 may comprise a PCB or other structure for supporting electrically conductive contacts 21, 22. The contacts are positioned in close proximity to an aperture 23. Only one aperture is required. The contacts may be placed around the periphery of the aperture.

As can be seen in Figure 3B, as the shaft of support member 12 is pushed through aperture 23, the first resiliently biased member may deform in order to fit through the aperture. Second resiliently biased member 13 is of a larger size than aperture 23 and therefore will not pass through the aperture, therefore the two resiliently biased members are positioned on opposite sides of support member 20. Optional washer 15 may provide an abutment for the second resiliently biased member 13 which gives a degree of protection to support member 20 from forces exerted by the second resiliently biased member 13. Washer 15 may also insulate the support member 20 from the second resiliently biased member. Only a low insertion fore is required to push the shaft of support member 12 through the aperture as would be understood. This retains the form of the deformable components of the tamper detect assembly 1, and prevents damage to support member 20.

Once passed through the aperture 23, the first resiliently biased member 10 returns to its resting-state (without any external forces being exerted upon it) as would be understood. As can be seen in Figure 3C, the action of the second resiliently biased member in attempting to extend in the direction as shown by arrow 24 has the effect of pulling the first resiliently biased member onto the two contacts 21, 22.

Owing to the first resiliently biased member 10 comprising an electrically conductive material, or comprising a conductive coating, the action of the second resiliently biased member 13 in the direction of arrow 24 electrically bridges the two contacts 21, 22. Such a short circuit is detectable by a processor, PLD, FPGA, or other such device as would be understood by the skilled person and is considered to be indicative of a tamper event.

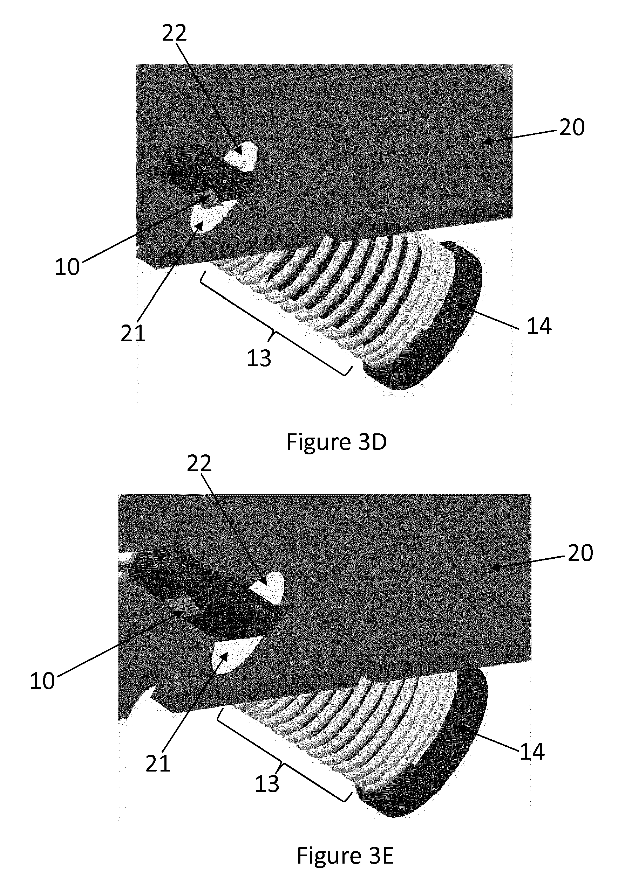

Figure 3D illustrates an isometric view of the tamper detect assembly in an extended position (contacts are bridged by first resiliently biased member 10) as also shown in Figure 3C

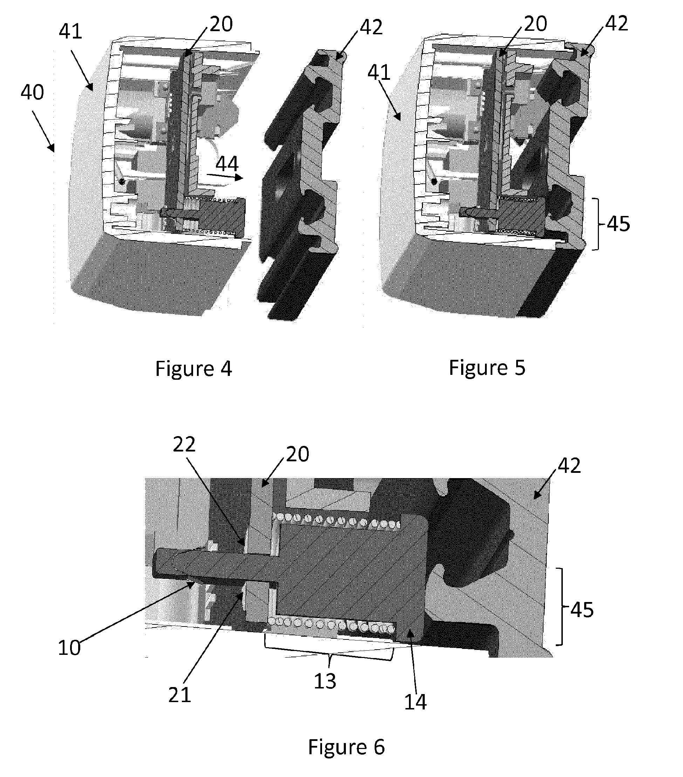

Figure 4 illustrates an isometric view of the tamper detect assembly in a compressed position (contacts are not bridged by first resiliently biased member 10) as also shown in Figure 6.

In order to provide tamper detection of a housing 40, the support member 20 may be positioned within a portion 41 of a housing as shown in Figure 4. The housing may comprise plastic and/or metal. As can be seen the support member 20 is positioned within the housing such that when no compression force or a force that is less than the bias force of second resiliently biased member 13 is applied to support member 14, resiliently biased member 13 urges support member 14 in a direction as shown by arrow 44. This scenario is also illustrated in Figures 3C and 3D. The first resiliently biased member 10 electrically bridges contacts 21, 22. The direction of movement of support member 14 by way of movement of second resiliently biased member 13 may be parallel to the shaft of support member 14 and/or may be towards another portion 42 of the housing. Portion 42 may comprise plastic and/or metal.

When the housing is fully assembled in an operational state as shown in Figure 5 (optionally providing a sealed housing around support member 20 and any other components therewithin), a further portion or feature 45 of housing portion 42 is arranged to provide a compression force against the biasing force of the second resiliently biased member 13. This scenario is also illustrated in Figures 3E and 6. As can be seen from Figure 5, when the housing is fully assembled, the first resiliently biased member 10 is held away from contacts 21, 22 and therefore the contacts are not electrically bridged. In this state no tamper is detected. It is noted that the device may operate in such a state as illustrated in Figures 5 and 6 for many years. In the embodiment where the device comprises a heat cost allocator, the components of the housing and the tamper detect assembly may have to undergo heat cycles which could cause expansion and contraction. The components chosen are such that permanent deformation does not occur under such static conditions which could compromise the ability to detect a tamper event.

Typically, housing portion 42 is mounted on a wall, door frame or other mounting point. In the embodiment of a heat cost allocator, housing portion 42 may be mounted on a radiator or other heat providing device. As would be understood, if a user attempts to gain access to the device, the weak point of the join between housing portions 41 and 42 would pull apart or break first. As a result, the housing would then be moved to a scenario such as that illustrated in Figure 4. As would be understood, without the compressive force of portion 45 of housing 43 upon support member 12, the second resiliently biased member 13 moves with its bias in a direction of arrow 44. The first resiliently biased member 12 therefore bridges the two contacts 21, 22 and a tamper detect event is detectable by a detection circuit as would be understood. Alternative arrangements in relation to the housing may be utilised in any manner such that a portion of the housing is movable relative to the portion where the support member 20 is positioned when in normal use. A tamper may occur and is detectable at any point in the housing where housing portion moves relative to the portion where the second support member 20 is positioned.

Accordingly, a simple to manufacture and assemble, low-cost, tamper detect assembly is provided. The assembly may be pre-assembled away from the device for which tampering is to be detected and can be installed using an easy process. The act of installation provides minimal stress to the underlying mounting point (aperture 23), or supporting structure (20) which increases the lifetime of the device. Further, the impact of the tamper detect assembly on the supporting structure, which may be a PCB of a device such as a heat cost allocator is minimal. Only one aperture, two contact pads and associated detect circuitry (as described herein) are required for the tamper detect assembly to be installed. Therefore the impact on PCB real-estate is minimal.

## Claims

1. A tamper detection assembly (1) comprising a first resiliently biased member (10) supported on a first portion (11) of a shaft of a first support member (12), where the first resiliently biased member passes through the shaft; and
a second resiliently biased member (13) supported on a second portion of the shaft of the first support member; wherein
the first resiliently biased member is arranged to electrically bridge contacts (21, 22) on a second support member (20) to indicate a tamper event when the biasing force of the second resiliently biased member is greater than any compression force thereon.

2. A method of assembling a tamper detection assembly (1), the method comprising:
positioning a first resiliently biased member (10) on a first portion (11) of a shaft of a first support member (12), where the first resiliently biased member passed through the shaft;
positioning a second resiliently biased member (13) on a second portion of the shaft of the first support member; and then
inserting the shaft of the first support member through an aperture (23) of a second support member (20) such that the first resiliently biased member is positioned on one side of the second support member, and the second resiliently biased member is positioned on the opposite side of the second support member; and wherein
the first resiliently biased member is arranged to electrically bridge contacts (21, 22) on the second support member to indicate a tamper event when the biasing force of the second resiliently biased member is greater than any compression force thereon.

3. The method according to claim 2 wherein the first resiliently biased member is arranged to deform during insertion through the aperture of the second support member.

4. The method of claim 2 or 3 further comprising positioning the second support member within a housing (40) wherein in a normal operational state, when the housing is in a closed position, a first portion (45) of the housing can provide a compression against the bias of the second resiliently biased member such that the first resilient member does not bridge the contacts.

5. The assembly or method of any preceding claim wherein the first resiliently biased member is electrically conductive.

6. The assembly or method of any preceding claim wherein the second support member comprises a PCB or other structure for providing bridgeable contacts.

7. The assembly or method of any preceding claim wherein the shaft of the first support member defines an axis and further optionally, wherein the second resiliently biased member is positioned on the axis.

8. The assembly or method of claim 7 wherein the second portion of the shaft comprises a third portion perpendicular to the axis.

9. The assembly or method of any preceding claim wherein the first support member is non-electrically conductive.

10. The assembly of any of claims 1 or 5 to 9 wherein the second support member is positioned within a housing wherein in a normal operational state, when the housing is in a closed position, a first portion (45) of the housing is arranged to provide a compressive force against the bias of the second resiliently biased member such that the first resilient member does not bridge the contacts.

11. The assembly of claim 10 wherein the first portion of the housing is movable in relation to another portion of the housing which supports the second support member.

12. The assembly or method of any preceding claim wherein the tamper detection assembly further comprises a detect circuit coupled to the contacts.

13. The assembly of any of claims 1 or 5 to 12 wherein the tamper detection assembly is arranged to be assembled before being mounted on the second support member.

14. The assembly or method of any preceding claim wherein the second support member comprises only one aperture (23) associated with the mounting of the tamper detect assembly.

15. The assembly or method of any preceding claim wherein the housing is a housing of a heat cost allocator.
